# EUROPÄISCHE PATENTSCHRIFT

(11) **EP 3 527 818 B1**
(45) Veröffentlichungstag und Bekanntmachung des Hinweises auf die Patenterteilung: **05.08.2020**
(21) Anmeldenummer: 19157532.3
(22) Anmeldetag: 15.02.2019
(51) Int. Cl.: F03D 17/00, G01P 13/02, G01P 21/00

(54) **VERFAHREN UND SYSTEM ZUR KALIBRIERUNG EINES ANEMOTROPOMETERS**
METHOD AND SYSTEM FOR CALIBRATING AN ANEMOMETER
PROCÉDÉ ET SYSTÈME D'ÉTALONNAGE D'UN ANÉMOTROPOMÈTRE

(30) Priorität: 19.02.2018 DE 102018001270
(43) Veröffentlichungstag der Anmeldung: 21.08.2019
(73) Patentinhaber: Senvion GmbH, 22297 Hamburg (DE)
(72) Erfinder: MITTELMEIER, Niko, 88048 Friedrichshaven (DE)
(74) Vertreter: Hahner, Ralph

(56) Entgegenhaltungen:
- EP-A1- 1 505 299
- EP-A1- 1 508 691
- EP-A1- 3 225 838

## Beschreibung

Die vorliegende Erfindung betrifft ein Verfahren und ein System zur Kalibrierung eines Anemotropometers einer Windenergieanlage sowie ein Verfahren zur Überwachung einer Windenergieanlage, ein Verfahren zum Betreiben einer Windenergieanlage, ein Computerprogramm und ein Computer-lesbares Medium.

Um einen optimalen Ertrag bei geringer Belastung einer Windenergieanlage zu erhalten, wird nach der optimalen Ausrichtung eines Rotors der Windenergieanlage zum Wind gesucht. Gewöhnlich erfolgt die Ausrichtung einer den Rotor tragenden Gondel zum Wind auf Grundlage der über ein Anemotropometer ermittelten Windrichtung. Ein fehlerhaft arbeitendes Anemotropometer, beispielsweise aufgrund von altersbedingten Lagerschäden oder fehlerhaftem Einbau, etwa mit fehlerhafter Ausrichtung, liefert fehlerhafte Messwerte, so dass keine optimale Ausrichtung des Rotors gegen den Wind möglich ist.

Üblicherweise ist das Anemotropometer auf der Gondel angebracht. Dadurch kann die Windrichtung nur punktuell und hinter dem Rotor bestimmt werden. Aufgrund vom Rotor erzeugten Turbulenzen und insbesondere dem Drall und der Ausmaße des Rotors wird eine solche Messung der Windrichtung somit verfälscht bzw. ist nicht repräsentativ für die Windrichtung, aus der der Wind auf die Rotorfläche trifft. Zudem ändern sich aufgrund der variablen Rotordrehzahl und der variablen Einstellwinkel der Rotorblätter die erzeugten Turbulenzen, so dass auch die mittels des Anemotropometers hinter dem Rotor bestimmte Windrichtung geändert wird, ohne dass sich die tatsächliche Windrichtung, aus welcher der Wind auf den Rotor trifft, ändert.

Zum Ausgleich dieser Verfälschungen werden üblicherweise zeitaufwändige Messreihen ausgeführt, um Korrekturfaktoren zu ermitteln, mit denen die vom Anemotropometer ermittelte Windrichtung korrigiert werden kann.

All diese Verfahren sind relativ aufwändig und unpräzise, so dass der Einfluss der Turbulenzen bzw. des Dralls auf die gemessene Windrichtung nicht präzise oder nur mit sehr hohem Aufwand bestimmt werden kann.

Die Druckschrift DE 10 2016 100 647 A1 betrifft ein Verfahren zum Betreiben einer Windenergieanlage, wobei eine auftretende Last an drei verstellbaren Rotorblättern eines Rotors der Windenergieanlage beim Durchlaufen von zwei festgelegten Kreissektoren erfasst wird. Aus Lastspitzen werden Differenzen für jedes der drei Rotorblätter, die zwischen dem Durchlaufen der Kreissektoren auftreten, ermittelt, und auf Grundlage der Differenzen wird ein Azimutwinkel einer Gondel der Windenergieanlage korrigiert.

Die Druckschrift EP 1 505 299 betrifft das Ermitteln eines Azimutwinkels eines Rotors durch zwei Anemometer beim Ausfall eines Giersensors.

Es ist eine Aufgabe der Erfindung, eine präzise Ausrichtung der Gondel einer Windenergieanlage zu ermöglichen. Insbesondere ist eine Aufgabe der Erfindung, eine Fehlweisung eines Anemotropometers zu korrigieren.

Diese Aufgabe wird gelöst durch ein Verfahren und ein System zur Kalibrierung eines Anemotropometers einer Windenergieanlage, einem Verfahren zur Überwachung einer Windenergieanlage und einem Verfahren zum Betreiben einer Windenergieanlage gemäß den unabhängigen Ansprüchen. Vorteilhafte Ausgestaltungen sind Gegenstand der Unteransprüche.

Ein erster Aspekt der Erfindung betrifft ein Verfahren zur Kalibrierung eines Anemotropometers einer Windenergieanlage, welches auf einer Leeseite eines Rotors der Windenergieanlage zusammen mit zwei Anemometern angeordnet ist. Das Verfahren weist folgende Arbeitsschritte auf: (i) Messen einer ersten Windgeschwindigkeit mittels eines ersten Anemometers, einer zweiten Windgeschwindigkeit mittels eines zweiten Anemometers und einer Windrichtung mittels des Anemotropometers, wobei über einen bestimmten Zeitraum eine Vielzahl an Messwerten aufgenommen wird; (ii) Ermitteln von Differenzen zwischen der ersten Windgeschwindigkeit und der zweiten Windgeschwindigkeit zu jeweils wenigstens im Wesentlichen gleichen Zeitpunkten; (iii) Ermitteln einer Modellfunktion für eine Beziehung zwischen gemessenen Windrichtungen und ermittelten Differenzen, welche wenigstens im Wesentlichen gleichen Zeitpunkten entsprechen, wobei wenigstens eine erste Modellfunktion für ein erstes Windgeschwindigkeitsbin und eine zweite Modellfunktion für ein zweites Windgeschwindigkeitsbin ermittelt wird; (iv) Ermitteln wenigstens eines Schnittpunktwerts der gemessenen Windrichtung, bei welchem sich die erste Modellfunktion und die zweite Modellfunktion schneiden; (v) Ausgeben des Schnittpunktwerts als Einbauwinkel des Anemotropometers.

Ein zweiter Aspekt der Erfindung betrifft ein Verfahren zur Kalibrierung eines Anemotropometers einer Windenergieanlage, welches auf einer Leeseite eines Rotors der Windenergieanlage zusammen mit zwei Anemometern angeordnet ist. Das Verfahren weist folgende Arbeitsschritte auf: (i) Messen einer ersten Windgeschwindigkeit mittels eines ersten Anemometers, einer zweiten Windgeschwindigkeit mittels eines zweiten Anemometers und einer Windrichtung mittels des Anemotropometers, wobei über einen bestimmten Zeitraum eine Vielzahl an Messwerte aufgenommen wird; (ii) Ermitteln von Differenzen zwischen der ersten Windgeschwindigkeit und der zweiten Windgeschwindigkeit zu jeweils wenigstens im Wesentlichen gleichen Zeitpunkten; (iii) Ermitteln einer Modellfunktion für eine Beziehung zwischen gemessenen Windrichtungen und ermittelten Differenzen, welche wenigstens im Wesentlichen gleichen Zeitpunkten entsprechen, für ein Windgeschwindigkeitsbin; (iv) Ermitteln eines Werts der gemessenen Windrichtung, bei welchem die Modellfunktion einen vorgegebenen Differenzwert, insbesondere wenigstens im Wesentlichen Null, annimmt; und (v) Ausgeben des ermittelten Werts als Einbauwinkel des Anemotropometers.

Ein Ermitteln von Differenzen zu jeweils wenigstens im Wesentlichen gleichen Zeitpunkten im Sinne der Erfindung ist insbesondere das Ermitteln von Differenzen zwischen der gemessenen ersten und zweiten Windgeschwindigkeit, wobei jede Differenz anhand von mindestens zwei Messwerten, die zum zumindest im Wesentlichen gleichen Zeitpunkt aufgenommen wurden, ermittelt wird. Vorzugsweise werden die Differenzen zwischen der ersten und zweiten Windgeschwindigkeit auf der Grundlage von Differenzen zwischen Mittelwerten für die erste und zweite Windgeschwindigkeit, die aus der Vielzahl an Messwerten gebildet werden, ermittelt, um den Einfluss von Messrauschen zu minimieren. Die Mittelwerte werden dabei bevorzugt über Mittelungsintervalle von mindestens 10 s, bevorzugt mindestens 30 s, insbesondere etwa 1 min, gebildet.

Ein Ermitteln einer Modellfunktion im Sinne der Erfindung ist insbesondere ein Bestimmen von Koeffizienten, vorzugsweise Regressionskoeffizienten, eines der Modellfunktion zu Grunde gelegten Modells. Eine Modellfunktion kann beispielsweise mittels eines Fits von Messwerten ermittelt werden.

Anhand einer Modellfunktion im Sinne der Erfindung kann insbesondere jeder gemessenen Windrichtung eine Differenz zwischen der ersten und zweiten Windgeschwindigkeit, insbesondere präzise, zugeordnet werden.

Ein Windgeschwindigkeitsbin im Sinne der Erfindung ist insbesondere ein Windgeschwindigkeitsintervall. Aufgenommene Messwerte können einem Windgeschwindigkeitsbin zugeordnet werden, indem eine zum zumindest im Wesentlichen gleichen Zeitpunkt gemessene Windgeschwindigkeit oder ein entsprechender Mittelwert aus mehreren Windgeschwindigkeitsmessungen dem entsprechenden Windgeschwindigkeitsbin zugeordnet werden. Insbesondere können Tupel aus Messwerten, die zum zumindest im Wesentlichen gleichen Zeitpunkt aufgenommen wurden, einem Windgeschwindigkeitsbin auf Grundlage mindestens eines Messwerts für eine Windgeschwindigkeit, der im Tupel enthalten ist, zugeordnet werden.

Ein Einbauwinkel eines Anemotropometers im Sinne der Erfindung ist insbesondere ein Differenzwinkel zwischen einer Rotorachse des Rotors der Windenergieanlage und einer definierten Ausrichtung des Anemotropometers, für die das Anemotropometer Messwerte von 0° ausgibt. Ein Einbauwinkel kann insbesondere eine durch einen Einbaufehler verursachte Missweisung des Anemotropometers, etwa eine Abweichung der Ausrichtung des Anemotropometers von der Rotorachse, kennzeichnen.

Wenigstens im Wesentlichen gleichen Zeitpunkten entsprechende gemessenen Windrichtungen und ermittelten Differenzen im Sinne der Erfindung sind insbesondere Windrichtungen und Differenzen, die jeweils wenigstens im Wesentlichen gleichen Zeitpunkten oder Mittelungsintervallen zugeordnet werden können, d.h. deren Messwerte jeweils zum wenigstens im Wesentlichen gleichen Zeitpunkt aufgenommen oder im gleichen Mittelungsintervall gemittelt wurden. Beispielsweise kann eine Windrichtung und eine Differenz einem Zeitpunkt entsprechen, wenn der entsprechende Messwert für die Windrichtung sowie die Messwerte für die Windgeschwindigkeiten, aus denen die Differenz gebildet wird, zu zumindest im Wesentlichen dem gleichen Zeitpunkt aufgenommen wurden. Eine andere Windrichtung und eine anderen Differenz entsprechen einem anderen Zeitpunkt, wenn der entsprechende andere Messwert sowie die anderen Messwerte für die Windgeschwindigkeiten zu zumindest im Wesentlichen dem anderen Zeitpunkt aufgenommen wurden.

Die Erfindung basiert insbesondere auf der Erkenntnis, dass die Differenz zwischen zwei Windgeschwindigkeiten, die bei einer Anströmung von zwei verschiedenen, auf einer Leeseite eines Rotors einer Windenergieanlage angeordneten Anemometern aus einer Richtung parallel zu einer Rotorachse des Rotors gemessen werden, wenigstens im Wesentlichen unabhängig von der Windstärke ist.

Beispielsweise entspricht eine auf Grundlage von Messwerten der Anemometer ermittelte Differenz für ein erstes Windgeschwindigkeitsbin, etwa bei einer Windgeschwindigkeit zwischen 5 m/s und 6 m/s, zumindest im Wesentlichen einer für ein zweites Windgeschwindigkeitsbin, etwa bei einer Windgeschwindigkeit zwischen 6 m/s und 7 m/s, ermittelten Differenz.

Diese Differenz tritt auf, da eine Abnahme der Windgeschwindigkeit hinter dem Rotor in erster Linie davon abhängt, an welcher radialen Position des Rotors der Wind durch die Rotorebene hindurchtritt. Ist die Windrichtung auf der Leeseite des Rotors parallel zur Rotorachse, so erfolgt die Anströmung der Anemometer stets von derselben radialen Position.

Durch Ermitteln mindestens einer Modellfunktion für die Beziehung zwischen mittels eines Anemotropometers gemessenen Windrichtungen und ermittelten Differenzen zwischen den gemessenen Windgeschwindigkeiten kann daher eine Abweichung zwischen der gemessenen Windrichtung und der Richtung, aus der die Anemometer tatsächlich angeströmten werden, präzise bestimmt werden.

Beispielsweise kann der Einbaufehler aus einem Schnittpunkt von zwei Modellfunktionen, die für zwei verschiedene Windgeschwindigkeitsbins ermittelt wurden, bestimmt werden. Am Schnittpunkt ist die Differenz zwischen den beiden gemessenen Windgeschwindigkeiten für verschiedene Windgeschwindigkeitsbins gleich, was einer Anströmung der zwei Anemometer aus einer Richtung parallel zur Rotorachse entspricht. Die dem Schnittpunkt zugeordnete Windrichtung gibt daher präzise den Einbauwinkel des Anemotropometers an.

Alternativ kann diejenige gemessene Windrichtung als Einbaufehler des Anemotropometers bestimmt werden, bei der die Modellfunktion einen vorgegebenen Differenzwert annimmt, insbesondere Null wird. Das Vorgeben eines solchen Differenzwerts kann beispielsweise sinnvoll sein, wenn die beiden Anemometer auch bei gleich starker Anströmung, etwa bauartbedingt aufgrund der relativen Positionierung der Anemometer zum Rotor, unterschiedliche Messwerte ausgeben. Der Differenzwert kann insbesondere als Null vorgegeben werden, wenn die Anemometer baugleich sind und/oder symmetrisch, insbesondere im selben Abstand, zur Rotorachse angeordnet sind, insbesondere wenn bei Anströmung der Anemometer aus einer Richtung parallel zur Rotorachse aufgrund der Anordnung der Anemometer gleiche Windgeschwindigkeiten gemessen werden.

Insgesamt erlaubt die Erfindung eine präzise Ausrichtung einer Gondel einer Windenergieanlage, insbesondere die Korrektur einer Fehlweisung eines Anemotropometers.

In einer bevorzugten Ausführungsform ist das der Modellfunktion zu Grunde liegende Modell linear. Dadurch kann die Modellfunktion unter geringem Rechenaufwand zuverlässig ermittelt werden. Das erfindungsgemäße Verfahren liefert daher schnell und zuverlässig den Einbauwinkel.

In einer weiteren bevorzugten Ausführungsform wird die Modellfunktion auf Grundlage einer Ausgleichsrechnung, insbesondere auf einer Regressionsanalyse, ermittelt. Vorzugsweise werden dabei Regressionskoeffizienten der Modellfunktion durch die Methode kleinster Fehlerquadrate ermittelt. Die Modellfunktion, insbesondere die Regressionskoeffizienten, kann beispielsweise durch einen Fit der gemessenen Windrichtungen und der zugehörigen ermittelten Differenzen ermittelt werden. Dies ermöglicht das Ermitteln einer Modellfunktion, die zuverlässig die Beziehung zwischen gemessenen Windrichtungen und ermittelten Differenzen angibt und deren Auswertung, insbesondere in Kombination mit mindestens einer weiteren Modellfunktion, eine präzise Bestimmung des Einbauwinkels erlaubt.

In einer weiteren bevorzugten Ausführungsform werden mehr als zwei Modellfunktionen ermittelt. Vorzugsweise wird der Einbauwinkel des Anemotropometers als Mittelwert aus mehreren ermittelten Schnittpunktwerten der gemessenen Windrichtung, bei welchen sich jeweils zwei Modellfunktionen für verschiedene Windgeschwindigkeitsbins schneiden, ausgegeben. Vorzugsweise wird als Mittelwert der Median bestimmt. Alternativ kann es sich beim Mittelwert aber beispielsweise auch um das arithmetische Mittel handeln.

Bei der Bestimmung des Mittelwerts wird vorzugsweise mindestens eine weitere statistische Größe, insbesondere eine Standardabweichung, ein maximaler Schnittpunktwert oder ein minimaler Schnittpunktwert, ermittelt und zusammen mit dem Einbauwinkel ausgegeben. Diese weiteren statistischen Größen können vorteilhaft in eine Regelung der Ausrichtung der Gondel eingehen, beispielsweise indem Regelintervalle oder Reaktionszeiten der Regelung in Abhängigkeit von den statistischen Größen bestimmt werden. Insbesondere kann eine Windenergieanlage unter Berücksichtigung der mindestens einen weiteren statistischen Größe betrieben werden. Die Ausrichtung der Gondel bei einer Änderung der Windrichtung kann dadurch besonders präzise und zuverlässig ausgeführt werden.

In einer weiteren bevorzugten Ausführungsform wird zur Messung der ersten Windgeschwindigkeit die vom ersten Anemometer erzeugte Vielzahl an Messwerten mit einer ersten Korrekturfunktion korrigiert und/oder zur Messung der zweiten Windgeschwindigkeit die vom zweiten Anemometer erzeugte Vielzahl an Messwerten mit einer zweiten Korrekturfunktion korrigiert. Bei der ersten und/oder zweiten Korrekturfunktion kann es sich insbesondere jeweils um eine Transferfunktion handeln, mittels der eine luvseitige Windgeschwindigkeit auf einer Luvseite des Rotors anhand einer auf der Leeseite gemessenen Windgeschwindigkeit ermittelt werden kann. Beispielsweise kann die gemessene Windgeschwindigkeit dadurch gegenüber Einflüssen des Rotors auf die Windgeschwindigkeit korrigiert werden. Alternativ oder zusätzlich kann die erste und/oder zweite Korrekturfunktion konfiguriert sein, um vom ersten und/oder zweiten Anemometer gemessenen Windgeschwindigkeiten an die jeweilige Bauart des Anemometers bzw. den jeweiligen Anemometertyp und/oder an eine räumlichen Anordnung der beiden Anemometer relativ zueinander, insbesondere relativ zur Rotorachse und/oder zum Anemotropometer, anzupassen. Auf diese Weise können konstruktionsbedingte und gegebenenfalls messtechnisch ungünstige räumliche Anordnungen der Anemometer ausgeglichen und/oder Windgeschwindigkeiten besonders präzise bestimmt werden, wodurch infolge eine besonders präzise Bestimmung des Einbauwinkels möglich ist.

In einer weiteren bevorzugten Ausführungsform werden für die erste Windgeschwindigkeit, für die zweite Windgeschwindigkeit und die Windrichtung jeweils Mittelwerte aus den über den bestimmten Zeitraum aufgenommenen Messewerten gebildet. Insbesondere können die Differenzen zwischen der ersten und zweiten Windgeschwindigkeit auf der Grundlage von Mittelwerten für die erste und zweite Windgeschwindigkeit ermittelt werden. Dabei können die Mittelwerte die erste und zweite Windgeschwindigkeit und die Windrichtung jeweils in vorgegebenen Mittelungsintervallen kennzeichnen. Vorzugsweise werden die Mittelungen dabei über Mittelungsintervalle von mindestens 10 s, insbesondere mindestens 30 s, vorzugsweise etwa 60 s ausgeführt. Dadurch kann der Einfluss von Messrauschen zuverlässig vermieden oder zumindest verringert werden, so dass das Anemotropometer präzise kalibriert werden. Dabei ist es insbesondere vorteilhaft, die Mittelungsintervalle nicht wesentlich länger als 10 min, insbesondere kürzer als 5 min, bevorzugt kürzer als 2 min zu wählen, damit eine Fehlstellung des Anemotropometers schnell festgestellt und gegebenenfalls korrigiert werden kann.

In einer weiteren bevorzugten Ausführungsform weist das Verfahren des Weiteren den folgenden Arbeitsschritt auf: Ausrichten der Gondel auf Grundlage von mittels des Anemotropometers gemessenen Windrichtungen und dem ausgegebenen Einbauwinkel. Ist der Einbauwinkel bekannt, kann er bzw. eine gegebenenfalls daraus resultierende Fehlausrichtung der Gondel beim Regeln der Ausrichtung der Gondel berücksichtigt werden. Dadurch wird eine besonders präzise Ausrichtung der Gondel ermöglicht. Ein dritter Aspekt der Erfindung betrifft ein Verfahren zur Überwachung einer Windenergieanlage mit einem Anemotropometer, welches auf einer Leeseite eines Rotors der Windenergieanlage zusammen mit zwei Anemometern angeordnet ist. Das Verfahren weist die folgenden Arbeitsschritte auf: (i) zyklisches Ausführen des Verfahrens nach dem ersten oder zweiten Aspekt der Erfindung; (ii) Ermitteln einer Kalibrationsgüte auf Grundlage eines zeitlichen Verlaufs des zyklisch ausgegebenen Einbauwinkels.

Ein zyklisches Ausführen im Sinne der Erfindung ist insbesondere das wiederholte Ausführen des Verfahrens nach dem ersten oder zweiten Aspekt der Erfindung für verschiedene, insbesondere aufeinanderfolgende, Zeiträume. Beispielsweise kann das Verfahren nach dem ersten oder zweiten Aspekt der Erfindung über eine Betriebsdauer von mehreren Jahren mehrmals ausgeführt werden, wobei jeweils Messdaten der beiden Anemometer und des Anemotropometers für einen vorbestimmten Zeitraum von beispielsweise einem Monat aufgenommen werden.

Eine Kalibrationsgüte im Sinne der Erfindung ist insbesondere ein Maß für die Zuverlässigkeit der Ausrichtung der Gondel der Windenergieanlage in Abhängigkeit von einer mittels des Anemotropometers gemessenen Windrichtung. Die Kalibrationsgüte kann beispielsweise von der, vorzugsweise über ein Zeitintervall gemittelte, absoluten Abweichung des ausgegebenen Einbauwinkels von einem vorgegebenen Referenzwinkel, insbesondere null, abhängen. Alternativ kann die Kalibrationsgüte beispielsweise von einem kumulativ aufeinanderfolgend ausgegebenen Einbauwinkel abhängen.

Insbesondere kann auf Grundlage des zyklisch ausgegebenen Einbauwinkels ermittelt werden, ob eine Fehlausrichtung der Gondel zunimmt. Dies kann ein Hinweis auf eine mit der Alterung von Komponenten der Windenergieanlage verbundene Fehlfunktion sein. Beispielsweise können Abnutzungserscheinungen in einem Lager eines Anemometers oder des Anemotropometers zu einer Verschlechterung der Kalibrationsgüte führen, oder eine Abdrift einer definierten Ausrichtung der Gondel aufgrund eines gealterten Ausrichtungsmechanismus. Mittels des erfindungsgemäßen Verfahrens können solche Fehlfunktionen erkannt und Gegenmaßnahmen ergriffen werden, so dass eine zuverlässige Ausrichtung der Gondel jederzeit ermöglicht wird.

Ein vierter Aspekt der Erfindung betrifft ein Verfahren zum Betreiben einer Windenergieanlage mit einer auf einem Turm angeordneten Gondel, einem Rotor und einem Anemotropometer, das auf einer Leeseite des Rotors zusammen mit zwei Anemometern angeordnet ist. Das Verfahren weist die folgenden Arbeitsschritte auf: (i) Bestimmen eines Einbauwinkels mittels eines Verfahrens gemäß dem Verfahren nach dem ersten oder zweiten Aspekt der Erfindung; (ii) Justieren des Anemotropometers auf Grundlage des ausgegebenen Einbauwinkels; und (iii) Ausrichten der Gondel auf Grundlage von mittels des justierten Anemotropometers gemessenen Windrichtungen. Durch das justierte Anemotropometer wird eine präzise Ausrichtung der Gondel ermöglicht.

Ein Justieren des Anemotropometers im Sinne der Erfindung ist insbesondere ein mechanisches Justieren, das vorzugsweise durch eine manuelle Neuausrichtung bzw. einer Korrektur der Ausrichtung des Anemotropometers relativ zur Rotorachse erreicht wird. Alternativ oder zusätzlich kann ein Justieren aber auch ein elektronisches Justieren sein, das vorzugsweise durch eine Berücksichtigung des ausgebebenen Einbauwinkels in einer Regelung der Ausrichtung der Gondel umgesetzt wird. Insbesondere kann eine definierte Ausrichtung des Anemotropometers, in der das Anemotropometer den Wert 0° ausgibt, auf Grundlage des ausgegebenen Einbauwinkels umdefiniert werden.

Ein fünfter Aspekt der Erfindung betrifft ein Computerprogramm, das Anweisungen umfasst, welche, wenn sie von einem Computer ausgeführt werden, diesen dazu veranlassen, die Schritte eines Verfahrens gemäß dem Verfahren nach dem ersten, zweiten, dritten oder vierten Aspekt der Erfindung ausführen.

Ein sechster Aspekt der Erfindung betrifft ein Computer-lesbares Medium, auf dem ein Computerprogramm nach dem fünften Aspekt der Erfindung gespeichert ist.

Ein siebter Aspekt der Erfindung betrifft ein System zur Kalibrierung eines Anemotropometers einer Windenergieanlage mit einem Anemotropometer zum Messen einer Windrichtung, einem ersten Anemometer zum Messen einer ersten Windgeschwindigkeit, einem zweiten Anemometer zum Messen einer zweiten Windgeschwindigkeit und einer Steuereinrichtung. Vorzugsweise sind das Anemotropometer, das erste Anemometer und das zweite Anemometer auf der Leeseite eines Rotors der Windenergieanlage angeordnet. Weiter vorzugsweise weist die Steuereinrichtung auf: (i) ein Mittel zum Aufnehmen einer Vielzahl an Messwerten des ersten und zweiten Anemometers und des Anemotropometers über einen vorgegebenen Zeitraum; (ii) ein Mittel zum Ermitteln von Differenzen zwischen der ersten Windgeschwindigkeit und der zweiten Windgeschwindigkeit zu jeweils wenigstens im Wesentlichen gleichen Zeitpunkten; (iii) ein Mittel zum Ermitteln einer ersten Modellfunktion für eine Beziehung zwischen mittels des Anemotropometers gemessenen Windrichtungen und ermittelten Differenzen, welche wenigstens im Wesentlichen gleichen Zeitpunkten entsprechen, für ein erstes Windgeschwindigkeitsbin; (iv) ein Mittel zum Ermitteln einer zweiten Modellfunktion für eine Beziehung zwischen mittels des Anemotropometers gemessenen Windrichtungen und ermittelten Differenzen, welche wenigstens im Wesentlichen gleichen Zeitpunkten entsprechen, für ein zweites Windgeschwindigkeitsbin; (v) ein Mittel zum Ermitteln wenigstens eines Schnittpunktwerts der gemessenen Windrichtung, bei welcher sich die erste Modellfunktion und die zweite Modellfunktion schneiden; und (vi) eine Schnittstelle, die dazu eingerichtet ist, den wenigstens einen ermittelten Schnittpunktwert als Einbauwinkel des Anemotropometers auszugeben.

Das erste Anemometer, das zweite Anemometer und/oder das Anemotropometer ist vorzugsweise dazu eingerichtet, die Messwerte für die gemessenen Windgeschwindigkeiten bzw. Windrichtung auszugeben, so dass sie von der Steuereinrichtung aufgenommen werden können. Die Steuereinrichtung weist vorzugsweise einen Speicher zum Aufnehmen der Messwerte und einen Prozessor zum Verarbeiten der Messwerte auf. Die Mittel zum Aufnehmen, zum Ermitteln von Differenzen, zum Ermitteln einer ersten und zweiten Modellfunktion und zum Ermitteln wenigstens eines Schnittpunktwerts können insbesondere als ein oder mehrere Softwaremodule ausgebildet sein, die vorzugsweise das Computerprogramm nach dem fünften Aspekt der Erfindung bilden.

In einer bevorzugten Ausführungsform sind das erste Anemometer und das zweite Anemometer in einer zur Rotorachse des Rotors senkrechten Ebene gemeinsam mit dem Anemotropometer angeordnet. Vorzugsweise sind das erste und zweite Anemometer gemeinsam mit dem Anemotropometer auf einer gemeinsamen Struktur auf der Gondel, insbesondere auf einem Messmast der Gondel, angeordnet. Dadurch wird insbesondere ermöglicht, dass vom ersten und zweiten Anemometer und dem Anemotropometer erzeugte Messwerte leicht zumindest im Wesentlichen gleichzeitig aufgenommen werden können. Zudem kann der Einbauwinkel mit dieser Anordnung besonders präzise bestimmt werden, da sich vom Rotor erzeugte Turbulenzen somit gleich stark auf die Messungen auswirken.

In einer weiteren bevorzugten Ausführungsform sind das erste Anemometer und das zweite Anemometer voneinander beabstandet angeordnet. Vorzugsweise sind das erste Anemometer und das zweite Anemometer in horizontaler Richtung versetzt angeordnet. Dadurch wird ermöglicht, dass die Differenzen zwischen mittels des ersten und zweiten Anemometers gemessenen Windgeschwindigkeiten ausreichend groß sind, um eine Modellfunktion zu ermitteln, welche die Beziehung zwischen Windrichtungen und den Differenzen besonders präzise wiedergibt.

Das erste Anemometer und das zweite Anemometer können dabei vorzugsweise in einer Ebene, insbesondere in einer zur Rotorachse des Rotors senkrechten Ebene, angeordnet sein. Weiter vorzugsweise können das erste Anemometer und das zweite Anemometer in demselben Abstand zum Anemotropometer angeordnet sein. Alternativ können das erste Anemometer und das zweite Anemometer aber auch asymmetrisch in Bezug auf die Rotorachse und/oder das Anemotropometer angeordnet sein. Insbesondere kann das zweite Anemometer in einem anderen Abstand zum Anemotropometer angeordnet sein als das erste Anemometer.

Insbesondere kann das Anemotropometer asymmetrisch zur Rotorachse angeordnet sein, sodass sich bei symmetrischer Anordnung der Anemometer zur Rotorachse unterschiedliche Abstände zwischen den Anemometern und dem Anemotropometer ergeben.

In einer weiteren bevorzugten Ausführungsform ist das erste Anemometer baugleich mit dem zweiten Anemometer ausgebildet. Dadurch kann sichergestellt werden, dass die zwischen der ersten und zweiten Windgeschwindigkeit ermittelten Differenzen im Wesentlichen durch am Rotor erzeugte Turbulenzen bzw. den Dralleffekt verursacht werden.

Die in Bezug auf den ersten Aspekt der Erfindung und dessen vorteilhafte Ausgestaltung beschriebenen Merkmale und Vorteile gelten, zumindest wo technisch sinnvoll, auch für den zweiten, dritten, vierten, fünften, sechsten und siebten Aspekt der Erfindung und dessen vorteilhafte Ausgestaltung sowie umgekehrt.

Die Erfindung wird im Folgenden anhand von nicht einschränkenden Ausführungsbeispielen, die in den Figuren dargestellt sind, näher erläutert. Darin zeigen wenigstens teilweise schematisch:
- **Fig. 1**: ein bevorzugtes Ausführungsbeispiel eines erfindungsgemäßen Systems;
- **Fig. 2**: ein bevorzugtes Ausführungsbeispiel mehrerer Modellfunktionen;
- **Fig. 3**: ein bevorzugtes Ausführungsbeispiel eines erfindungsgemäßen Verfahrens zur Kalibrierung eines Anemotropometers;
- **Fig. 4**: ein bevorzugtes Ausführungsbeispiel eines erfindungsgemäßen Verfahrens zum Betreiben einer Windenergieanlage; und
- **Fig. 5**: ein bevorzugtes Ausführungsbeispiel eines erfindungsgemäßen Verfahrens zur Überwachung einer Windenergieanlage.

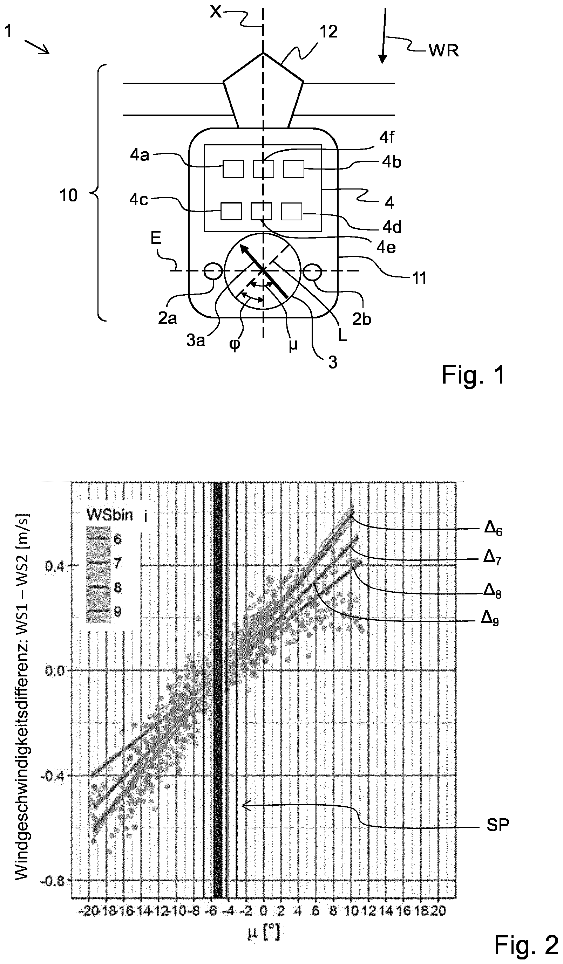

**Figur 1** zeigt ein bevorzugtes Ausführungsbeispiel eines erfindungsgemäßen Systems 1 mit einem ersten Anemometer 2a zum Messen einer ersten Windgeschwindigkeit, einem zweiten Anemometer 2b zum Messen einer zweiten Windgeschwindigkeit, einem Anemotropometer 3 zum Messen einer Windrichtung µ und einer Steuereinrichtung 4, die mit den beiden Anemometern 2a, 2b und dem Anemotropometer 3 verbunden ist.

Die beiden Anemometer 2a, 2b und das Anemotropometer 3 sind vorzugsweise auf einer Gondel 11 einer Windenergieanlage 10 angeordnet, wobei die Gondel einen Rotor 12 mit mindestens zwei, insbesondere drei, Rotorblättern trägt. Die Anemometer 2a, 2b und das Anemotropometer 3 können dabei insbesondere auf einer Leeseite des Rotors 12 angeordnet sein. Der den Rotor 12 luvseitig aus einer Windrichtung WR anströmende Wind wird durch den Rotor 12 abgelenkt, so dass die vom Anemotropometer 3 gemessene Windrichtung µ nicht der luvseitigen Windrichtung WR entspricht.

Üblicherweise ist das Anemotropometer ungewollt unter einem Einbauwinkel ϕ gegenüber einer Rotorachse X des Rotors 12 ausgerichtet. Der Einbauwinkel ϕ entspricht insbesondere dem Winkel zwischen der Rotorachse X und einer definierten Ausrichtung L des Anemotropometers 3, auf die sich vom Anemotropometer 3 ausgegebenen Windrichtungen beziehen. Die definierte Ausrichtung L ist insbesondere dadurch ausgezeichnet, dass das Anemotropometer, wenn eine Windfahne 3a des Anemotropometers 3 entlang der definierten Ausrichtung L ausgerichtet ist, den Wert 0° für die gemessene Windrichtung µ ausgibt.

In dem gezeigten Beispiel ist die Windfahne 3a etwa um 45° gegenüber der Rotorachse X ausgerichtet. Durch die dem Einbauwinkel ϕ entsprechende Fehlausrichtung gibt das Anemotropometer 3 jedoch den Wert 90° aus.

Der Einbauwinkel ϕ lässt sich bestimmen, wenn die Windrichtung µ das Anemotropometer entlang der Rotorachse X angeströmt wird, denn in diesem Fall ist der Einbauwinkel ϕ gleich der Windrichtung µ , d.h. gleich dem vom Anemotropometer 3 ausgegebenen Wert. Das Vorliegen dieses Falles kann anhand der mittels der Anemometer 2a, 2b gemessenen Windgeschwindigkeiten identifiziert werden, da auch für verschiedene Windstärken die Differenz zwischen der mittels des ersten Anemometers 2a gemessenen Windgeschwindigkeit und der mittels des zweiten Anemometers gemessenen Windgeschwindigkeit bei einer Anströmung aus einer Richtung parallel zur Rotorachse X zumindest im Wesentlichen konstant ist.

Vorzugsweise sind die beiden Anemometer 2a, 2b zusammen mit dem Anemotropometer 3 in einer Ebene E angeordnet, die senkrecht auf der Rotorachse X steht. Weiter vorzugsweise sind die beiden Anemometer 2a, 2b in jeweils dem gleichen Abstand zum Anemotropometer 3 angeordnet. Insbesondere können die beiden Anemometer 2a, 2b symmetrisch bezüglich der Rotorachse X angeordnet sein. Es ist weiterhin bevorzugt, die beiden Anemometer 2a, 2b möglichst weit voneinander beabstandet anzuordnen, etwa in einer Entfernung von mindestens 1 m, vorzugsweise mindestens 2 m, insbesondere mindestens 3 m, so dass sichergestellt werden kann, dass die Anemometer 2a, 2b unterschiedlich durch den am Rotor 12 abgelenkten Wind angeströmt werden können.

Die Steuereinrichtung 4 weist vorzugsweise ein Mittel 4a zum Aufnehmen einer Vielzahl an Messwerten des ersten und zweiten Anemometers 2a, 2b sowie des Anemotropometers 3 auf, die über einen vorgegebenen Zeitraum von den Anemometern 2a, 2b und dem Anemotropometer 3 erzeugt und bereitgestellt werden. Die Steuereinrichtung 4 weist weiter vorzugsweise ein Mittel 4b zum Ermitteln von Differenzen zwischen der ersten Windgeschwindigkeit und der zweiten Windgeschwindigkeit zu jeweils wenigstens im Wesentlichen gleichen Zeitpunkten auf. Dabei sind die Anemometer 2a, 2b in bevorzugter Weise synchronisiert, d.h. dazu eingerichtet, Messwerte im Wesentlichen synchron zu erzeugen, so dass das Mittel 4b zum Ermitteln von Differenzen zu jedem Zeitpunkt, an dem von den Anemometern 2a, 2b jeweils ein Messwert erzeugt wird, die Differenz zwischen der ersten und zweiten gemessenen Windgeschwindigkeit ermittelt werden kann. Die von den Anemometern 2a, 2b und dem Anemotropometer 3 bereitgestellten Messwertewerden vor einer Weiterverarbeitung in der Steuereinrichtung 4 vorzugsweise zeitlich gemittelt. Bevorzugte Mittelungsintervalle sind insbesondere mindestens 10 s, vorzugsweise mindestens 30 s, insbesondere etwa 1 Minute.

Alternativ oder zusätzlich kann das Mittel 4a zum Aufnehmen einer Vielzahl an Messwerten dazu eingerichtet sein, jeweils einen zuletzt erzeugten Messwert vom ersten und zweiten Anemometer 2a, 2b synchron aufzunehmen. Vorzugsweise erzeugen die beiden Anemometer 2a, 2b die Messwerte dabei mit einer hohen Frequenz, beispielsweise öfter als mit 5 Hz, bevorzugt öfter als mit 1 Hz.

Vorzugsweise weist die Steuereinrichtung 4 weiterhin ein Mittel 4c zum Ermitteln einer ersten Modellfunktion für eine Beziehung zwischen mittels des Anemotropometers gemessenen Windrichtungen µ und ermittelten Differenzen, welche wenigstens im Wesentlichen gleichen Zeitpunkten entsprechen, für ein erstes Windgeschwindigkeitsbin auf. Die Steuereinrichtung 4 weist in bevorzugter Weise ein Mittel 4d zum Ermitteln einer zweiten Modellfunktion für eine Beziehung zwischen mittels des Anemotropometers gemessenen Windrichtungen µ und ermittelten Differenzen, welche wenigstens im Wesentlichen gleichen Zeitpunkten entsprechen, für ein zweites Windgeschwindigkeitsbin auf. Das Mittel 4c zum Ermitteln einer ersten Modellfunktion und das Mittel 4d zum Ermitteln einer zweiten Modellfunktion können bevorzugt Teil eines übergeordneten Mittels zum Ermitteln von Modellfunktionen für Beziehungen zwischen gemessenen Windrichtungen und ermittelten Windgeschwindigkeitsdifferenzen für verschiedene Windgeschwindigkeitsbins sein.

Die Mittel 4c, 4d zum Ermitteln einer ersten und zweiten Modellfunktion sind vorzugsweise dazu eingerichtet, eine mathematische Beziehung für die Abhängigkeit der ermittelten Windgeschwindigkeitsdifferenzen von der gemessenen Windrichtung µ in jeweils einem Windgeschwindigkeitsbin zu finden. Die Mittel 4c, 4b können beispielsweise dazu eingerichtet sein, eine Ausgleichsrechnung auszuführen, in deren Rahmen der Modellfunktion insbesondere ein lineares Modell zugrunde gelegt wird. Die Mittel 4c, 4b können etwa dazu eingerichtet sein, die Abhängigkeit der Windgeschwindigkeitsdifferenzen von den gemessenen Windrichtungen µ mit einem linearen Fit zu approximieren.

Beispielsweise kann die Beziehung zwischen den gemessenen Windrichtung und ermittelten Differenzen durch ein lineares Regressionsmodell Δᵢ = ß₀ᵢ + β₁ᵢ·µ beschrieben werden, wobei Δᵢ die Windgeschwindigkeitsdifferenz, µ die gemessene Windrichtung und β₀ᵢ, β₁ᵢ zu bestimmende Regressionskoeffizienten sind. Der Index i gibt dabei die Windgeschwindigkeitsbin an.

Die Steuereinrichtung 4 weist vorzugsweise weiterhin ein Mittel 4e zum Ermitteln wenigstens eines Schnittpunktwerts der gemessenen Windrichtung µ , bei welchem sich die erste Modellfunktion und die zweite Modellfunktion schneiden, und eine Schnittstelle 4f auf, wobei die Schnittstelle dazu eingerichtet ist, den wenigstens einen ermittelten Schnittpunktwert als Einbauwinkel ϕ des Anemotropometers 3 auszugeben.

Das Mittel 4e zum Ermitteln wenigstens eines Schnittpunktwerts kann insbesondere dazu eingerichtet sein, die ermittelten Modellfunktionen gleichzusetzen, um den Schnittpunktwert, der eine gemessene Windrichtung charakterisiert, zu bestimmen. Der Schnittpunktwert ergibt sich vorzugsweise zu µ = (β₀ⱼ - β₀ᵢ) / (β₁ᵢ - β₁ⱼ), wobei der Index i die erste Windgeschwindigkeitsbin i und der Index j die zweite Windgeschwindigkeitsbin j kennzeichnet.

Die durch den ermittelten Schnittpunktwert gekennzeichnete Windrichtung µ entspricht einer Windrichtung, in welcher der vom Rotor 12 abgelenkte Wind im Wesentlichen parallel zur Rotorachse X verläuft. Denn unabhängig von der Stärke des auf den Rotor einwirkenden Windes ist in diesem Fall die Differenz zwischen der vom ersten Anemometer 2a gemessenen Windstärke und der vom zweiten Anemometer 2b gemessenen Windstärke konstant. Der Schnittpunkt der Modellfunktionen für zwei unterschiedliche Windgeschwindigkeitsbins kennzeichnet daher einer Windrichtung, die einem Einbauwinkel ϕ des Anemotropometers 3 entspricht.

**Figur 2** zeigt ein bevorzugtes Ausführungsbeispiel mehrerer Modellfunktionen Δᵢ mit i = 6, 7, 8, 9 einer Beziehung zwischen mittels eines Anemotropometers gemessenen Windrichtungen µ und ermittelten Differenzen zwischen mittels einem ersten Anemometer gemessenen Windgeschwindigkeiten WS1 und mittels einem zweiten Anemometer gemessenen Windgeschwindigkeiten WS2, wobei Messwerte für die Windrichtungen µ und die Windgeschwindigkeiten WS1, WS2 vorzugsweise über einen definierten, insbesondere vorbestimmten, Zeitraum auf einer Gondel einer Windenergieanlage auf der Leeseite eines Rotors der Windenergieanlage aufgenommen werden. Die Messwerte können etwa als Tupel, insbesondere als 3-Tupel, aufgenommen werden, so dass jeweils eine zum zumindest im Wesentlichen gleichen Zeitpunkt gemessene Windrichtung µ, eine erste gemessenen Windgeschwindigkeit WS1 und eine zweite gemessenen Windgeschwindigkeit WS2 einander zugeordnet sind.

Die Messwerte für die Windgeschwindigkeiten WS1, WS2, insbesondere ein Mittelwert der ersten und zweiten Windgeschwindigkeit WS1, WS2 eines Tupels, werden vorzugsweise verschiedenen Windgeschwindigkeitsbins i zugeordnet, und die Modellfunktionen Δᵢ jeweils auf Grundlage aller einer Windgeschwindigkeitsbin i zugeordneten Messwerte ermittelt. Beispielsweise sind alle Messwerte, die zu Zeitpunkten aufgenommen wurden, an denen die mittlere gemessene Windgeschwindigkeit zwischen 5 m/s und 6 m/s lag, einer Windgeschwindigkeitsbin i = 6 zugeordnet, während alle Messwerte, die zu Zeitpunkten aufgenommen wurden, an denen die mittlere gemessene Windgeschwindigkeit zwischen 6 m/s und 7 m/s lag, einer Windgeschwindigkeitsbin i = 7 zugeordnet sind.

Den Modellfunktionen Δᵢ wird vorzugsweise ein lineares Regressionsmodell Δᵢ = β₀ᵢ + β₁ᵢ·µ zugrunde gelegt, so dass die Beziehungen zwischen gemessenen Windrichtungen µ und ermittelten Differenzen, welche im Wesentlichen gleichen Zeitpunkten entsprechen, durch zwei Regressionskoeffizienten β₀ᵢ, β₁ᵢ bestimmt wird. Die Regressionskoeffizienten β₀ᵢ, β₁ᵢ können insbesondere durch eine Ausgleichsrechnung, beispielsweise einen Fit der Messwerte, ermittelt werden.

Unter der Annahme, dass bei einer Windrichtung µ , bei der der Wind auf einer Leeseite eines Rotors entlang einer Rotorachse (siehe Figur 1) strömt, die Differenz zwischen den mittels des ersten und zweiten Anemometers gemessenen Windgeschwindigkeiten WS1, WS2 für verschiedene Windgeschwindigkeitsbins i im Wesentlichen gleich ist, kann aus dem Schnittpunktwert SP zweier Modellfunktionen Δᵢ derjenige Winkel bestimmt werden, unter dem das Anemotropometer auf der Gondel relativ zur Rotorachse eingebaut ist.

In Figur 2 sind die Schnittpunktwerte SP jeweils zweier Modellfunktionen Δᵢ durch vertikale Linien angedeutet. Dabei ergibt sich für eine Anzahl n an Modellfunktionen Δᵢ bzw. Windgeschwindigkeitsbins i eine Anzahl c an Schnittpunktwerten SP: c = n·(n - 1) / 2. Vorzugsweise wird als Einbauwinkel des Anemotropometers ein Mittelwert, insbesondere der Median, aller Schnittpunktwerte SP ausgegeben. Zusätzlich können auch der maximale Schnittpunktwert SP, der minimale Schnittpunktwert SP und eine Standardabweichung vom Mittelwert ausgegeben werden.

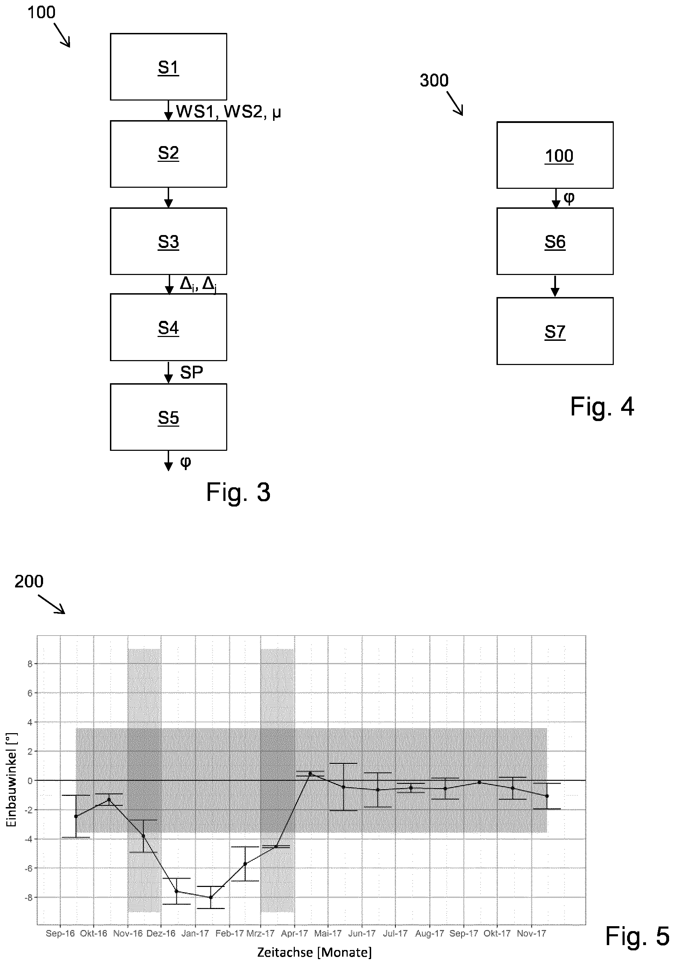

**Figur 3** zeigt ein Ausführungsbeispiel für ein Verfahren 100 zur Kalibrierung eines Anemotropometers einer Windenergieanlage, wobei das Anemotropometer auf einer Leeseite eines Rotors der Windenergieanlage zusammen mit zwei Anemometern angeordnet ist.

In einem Verfahrensschritt S1 wird mittels eines ersten Anemometers eine erste Windgeschwindigkeit WS1, mittels eines zweiten Anemometers eine zweite Windgeschwindigkeit WS2 und mittels des Anemotropometers eine Windrichtung µ gemessen. Vorzugsweise werden dazu über einen vorbestimmten Zeitraum eine Vielzahl an Messwerten des ersten und zweiten Anemometers sowie des Anemotropometers aufgenommen. Die Messwerte gehen dabei in bevorzugter Weise als Mittelwerte in mehrere Tupel, insbesondere 3-Tupel, für eine erste Windgeschwindigkeit WS1, eine zweite Windgeschwindigkeit WS2 und eine Windrichtung µ ein, wobei die Mittelwerte für die Windgeschwindigkeiten WS1, WS2 und die Windrichtung µ bevorzugt innerhalb eines im Wesentlichen gleichen Mittelungsintervalls aufgenommen werden. Ein bevorzugtes Mittelungsintervall für die Mittelung der Messwerte, die in ein Tupel eingehen, beträgt mindestens 10 s, vorzugsweise mindestens 30s, insbesondere mindestens 60 s.

In einem weiteren Verfahrensschritt S2 werden Differenzen zwischen der ersten Windgeschwindigkeit WS1 und der zweiten Windgeschwindigkeit WS2 zu jeweils wenigstens im Wesentlichen gleichen Zeitpunkten ermittelt. Insbesondere wird für jedes Tupel aus Messwerten eine Differenz zwischen den beiden, vorzugsweise gemittelten, Windgeschwindigkeiten WS1, WS2 bestimmt.

In einem weiteren Verfahrensschritt S3 wird für ein erstes Windgeschwindigkeitsbin i eine erste Modellfunktion Δᵢ für eine Beziehung zwischen gemessenen Windrichtungen µ und ermittelten Differenzen, welche wenigstens im Wesentlichen gleichen Zeitpunkten entsprechen, ermittelt. Für ein zweites Windgeschwindigkeitsbin j wird eine zweite Modellfunktion Δⱼ für eine Beziehung zwischen gemessenen Windrichtungen µ und ermittelten Differenzen, welche wenigstens im Wesentlichen gleichen Zeitpunkten sprechen, ermittelt.

Die Modellfunktionen Δᵢ, Δⱼ werden vorzugsweise jeweils auf Grundlage von Messwerten ermittelt, die dem ersten Windgeschwindigkeitsbin i oder dem zweiten Windgeschwindigkeitsbin j anhand der Windgeschwindigkeiten WS1, WS2, insbesondere einen Mittelwert aus den Windgeschwindigkeiten WS1, WS2, zugeordnet wurden. Dabei kann die Zuordnung im Rahmen des Verfahrensschritts S2 oder S3 ausgeführt werden.

Die Modellfunktionen Δᵢ, Δⱼ werden vorzugsweise auf Grundlage einer Ausgleichsrechnung, insbesondere einer Regressionsanalyse, ermittelt. In bevorzugter Weise werden dabei Regressionskoeffizienten der Modellfunktionen ermittelt, etwa anhand der Methode der kleinsten Fehlerquadrate.

In einem weiteren Verfahrensschritt S4 wird wenigstens ein Schnittpunktwert SP der gemessenen Windrichtung µ ermittelt, bei dem sich die erste Modellfunktion Δᵢ und die zweite Modellfunktion Δⱼ schneiden. Dazu werden vorzugsweise die beiden Modellfunktionen Δᵢ, Δⱼ gleichgesetzt und nach der Windrichtung µ aufgelöst. Insbesondere kann mittels der im vorangehenden Verfahrensschritt S3 ermittelten Regressionskoeffizienten ein Wert für die Windrichtung µ berechnet werden, der dem Schnittpunktwert SP entspricht.

Alternativ kann in Verfahrensschritt S4 ein Wert der gemessenen Windrichtung ermittelt werden, bei dem die erste Modellfunktion Δᵢ einen vorgegebenen Differenzwert, insbesondere im Wesentlichen Null, annimmt. Dazu wird vorzugsweise die Modellfunktion Δᵢ gleich dem vorgegebenen Differenzwert gesetzt und nach der Windrichtung µ aufgelöst.

Dies kann insbesondere vorteilhaft sein, wenn die beiden Anemometer in der Weise leeseitig hinter dem Rotor der Windenergieanlage angeordnet sind, dass bei einer Anströmung der beiden Anemometer aus einer Richtung parallel zu einer Rotorachse des Rotors beide Anemometer die gleiche Windgeschwindigkeit messen oder die Abweichung der entsprechenden Messwerte bekannt ist.

Da in diesem Fall die Ermittlung der zweiten Modellfunktion Δⱼ nicht zwingend notwendig ist, kann auf die Ermittlung der zweiten Modellfunktion Δⱼ für das zweite Windgeschwindigkeitsbin j im Verfahrensschritt S3 verzichtet werden.

In einem weiteren Verfahrensschritt S5 wird der ermittelte Schnittpunktwert SP bzw. der ermittelte Wert als Einbauwinkel ϕ des Anemotropometers, insbesondere relativ zu einer Rotorachse des Rotors der Windenergieanlage, ausgegeben. Auf Grundlage des ausgegebenen Einbauwinkels ϕ kann das Anemotropometer justiert werden und die Gondel der Windenergieanlage anhand von mittels des justierten Anemotropometers gemessenen Windrichtungen µ ausgerichtet werden.

**Figur 4** zeigt ein bevorzugtes Ausführungsbeispiel eines erfindungsgemäßen Verfahrens 300 zum Betreiben einer Windenergieanlage. Dabei wird das erfindungsgemäßen Verfahren 100 zur Kalibrierung eines Anemotropometers, wie in Zusammenhang mit Figur 3 ausgeführt, angewendet.

Der dabei ausgegebene Einbauwinkel ϕ kann in einem Verfahrensschritt S6 zum Justieren des Anemotropometers verwendet werden. Beispielsweise kann das Anemotropometer von einem Wartungstechniker auf einer Gondel der Windenergieanlage neu ausgerichtet, insbesondere um den ausgegebenen Einbauwinkel ϕ gedreht werden. Alternativ kann der ausgegebene Einbauwinkel im Rahmen einer elektronischen Justage beim Ausrichten der Gondel berücksichtigt werden.

In einem weiteren Verfahrensschritt S7 wird die Gondel auf Grundlage von mittels des justierten Anemotropometers gemessenen Windrichtungen ausgerichtet.

**Figur 5** zeigt ein bevorzugtes Ausführungsbeispiel für ein erfindungsgemäßes Verfahren 200 zur Überwachung einer Windenergieanlage, bei dem ein Einbauwinkel ϕ zyklisch ausgegeben wird, insbesondere über einen Betriebszeitraum einer Windenergieanlage von 15 Monaten.

Ein als Einbauwinkel ϕ ausgegebener Schnittpunktwert wird dabei wiederholt gemäß dem erfindungsgemäßen Verfahren zur Kalibrierung eines Anemotropometers, wie vorstehend in Zusammenhang mit Figur 3 beschrieben ist, ermittelt. Der vorbestimmte Zeitraum, in dem Messwerte für eine erste Windgeschwindigkeit eines ersten Anemometers, Messwerte für eine zweite Windgeschwindigkeit eines zweiten Anemometers und Messwerte für eine Windrichtung eines Anemotropometers aufgenommen wurden, beträgt im vorliegenden Beispiel jeweils einen Monat.

Anhand der ausgegebenen Einbauwinkel ϕ für die Monate Sept-16 und Okt-16 wurde das Anemotropometer justiert. Gleichzeitig wurde ein sog. Offset, d.h. eine konstante Ausrichtungskorrektur, für die Ausrichtung einer Gondel der Windenergieanlage geändert, wodurch die ausgegebenen Einbauwinkel ϕ für die Monate Nov-16 bis Mrz-17 stärker von Null abweichen. Für die Monate Apr-17 bis Nov-17 wurde das Offset zurückgesetzt auf einen Wert, der in Bezug auf eine Windrichtung des einen Rotor der Windenergieanlage anströmende Windes eine optimale Ausrichtung der Gondel ermöglicht. Die daraufhin ausgegebenen Einbauwinkel ϕ liegen im Bereich zwischen -1° und 1°, was auf ein präzise justiertes Anemotropometer schließen lässt.

Auf Grundlage der relativen Änderungen der zyklischen ausgegebenen Einbauwinkel ϕ zueinander kann eine Kalibrationsgüte ermittelt werden. Weichen die ausgegebenen Einbauwinkel über einen längeren Zeitraum in einer Richtung voneinander ab, d.h. erhöht bzw. verringert sich der ausgegebene Einbauwinkel ϕ zunehmend, sinkt die Kalibrationsgüte. Dies kann ein Hinweis auf einen Defekt sein, beispielsweise auf ein abgenutztes Lager eines der Anemometer oder einen fehlerhaften Ausrichtungsmechanismus der Gondel.

### Bezugszeichenliste

- 1: System

- 2a, 2b: erstes, zweites Anemometer
- 3: Anemotropometer
- 3a: Windfahne
- 4: Steuereinrichtung
- 4a: Mittel zum Aufnehmen
- 4b: Mittel zum Ermitteln von Differenzen
- 4c: Mittel zum Ermitteln einer ersten Modelfunktion
- 4d: Mittel zum Ermitteln einer zweiten Modellfunktion
- 4e: Mittel zum Ermitteln eines Schnittpunktwerts
- 4f: Schnittstelle

- 10: Windenergieanlage
- 11: Gondel
- 12: Rotor

- 100: Verfahren zur Kalibrierung eines Anemotropometers
- 200: Verfahren zur Überwachung einer Windenergieanlage
- 300: Verfahren zum Betreiben einer Windenergieanlage

- S1 - S7: Verfahrensschritte

- X: Rotorachse
- L: definierte Ausrichtung
- E: Ebene
- Δᵢ, Δⱼ: erste, zweite Modellfunktion
- µ: gemessene Windrichtung
- WR: luvseitige Windrichtung
- WS1, WS2: erste, zweite Windgeschwindigkeit
- SP: Schnittpunktwert
- ϕ: Einbauwinkel

## Patentansprüche

1. Verfahren (100) zur Kalibrierung eines Anemotropometers (3) einer Windenergieanlage (10), welches auf einer Leeseite eines Rotors (12) der Windenergieanlage (10) zusammen mit zwei Anemometern (2a, 2b) angeordnet ist, folgende Arbeitsschritte aufweisend:
Messen (S1) einer ersten Windgeschwindigkeit (WS1) mittels eines ersten Anemometers (2a), einer zweiten Windgeschwindigkeit (WS2) mittels eines zweiten Anemometers (2b) und einer Windrichtung (µ) mittels des Anemotropometers (3), wobei über einen bestimmten Zeitraum eine Vielzahl an Messwerten aufgenommen wird;
Ermitteln (S2) von Differenzen zwischen der ersten Windgeschwindigkeit (WS1) und der zweiten Windgeschwindigkeit (WS2) zu jeweils wenigstens im Wesentlichen gleichen Zeitpunkten;
Ermitteln (S3) einer Modellfunktion (Δᵢ, Δⱼ) für eine Beziehung zwischen gemessenen Windrichtungen (µ) und ermittelten Differenzen, welche wenigstens im Wesentlichen gleichen Zeitpunkten entsprechen, wobei wenigstens eine erste Modellfunktion (Δᵢ) für ein erstes Windgeschwindigkeitsbin (i) und eine zweite Modellfunktion (j) für ein zweites Windgeschwindigkeitsbin (Δⱼ) ermittelt wird;
Ermitteln (S4) wenigstens eines Schnittpunktwerts (SP) der gemessenen Windrichtung (µ), bei welchem sich die erste Modellfunktion (Δᵢ) und die zweite Modellfunktion (Δⱼ) schneiden;
Ausgeben (S5) des Schnittpunktwerts (SP) als Einbauwinkel (ϕ) des Anemotropometers (3).

2. Verfahren (100) zur Kalibrierung eines Anemotropometers (3) einer Windenergieanlage (10), welches auf einer Leeseite eines Rotors (2) der Windenergieanlage (10) zusammen mit zwei Anemometern (2a, 2b) angeordnet ist, folgende Arbeitsschritte aufweisend:
Messen (S1) einer ersten Windgeschwindigkeit (WS1) mittels eines ersten Anemometers (2a), einer zweiten Windgeschwindigkeit (WS2) mittels eines zweiten Anemometers (2b) und einer Windrichtung (µ) mittels des Anemotropometers (3), wobei über einen bestimmten Zeitraum eine Vielzahl an Messwerte aufgenommen wird;
Ermitteln (S2) von Differenzen zwischen der ersten Windgeschwindigkeit (WS1) und der zweiten Windgeschwindigkeit (WS2) zu jeweils wenigstens im Wesentlichen gleichen Zeitpunkten;
Ermitteln (S3) einer Modellfunktion (Δᵢ) für eine Beziehung zwischen gemessenen Windrichtungen (µ) und ermittelten Differenzen, welche wenigstens im Wesentlichen gleichen Zeitpunkten entsprechen, für ein Windgeschwindigkeitsbin (i);
Ermitteln (S4) eines Werts der gemessenen Windrichtung (µ), bei welchem die Modellfunktion (Δᵢ) einen vorgegebenen Differenzwert, insbesondere wenigstens im Wesentlichen Null, annimmt; und
Ausgeben (S5) des ermittelten Werts als Einbauwinkel (ϕ) des Anemotropometers.

3. Verfahren (100) nach einem der vorangehenden Ansprüche, wobei das der Modellfunktion (Δᵢ, Δⱼ) zu Grunde liegende Modell linear ist.

4. Verfahren (100) nach einem der vorangehenden Ansprüche, wobei die Modellfunktion (Δᵢ, Δⱼ) auf Grundlage einer Ausgleichsrechnung, insbesondere auf einer Regressionsanalyse, ermittelt wird.

5. Verfahren (100) nach einem der vorangehenden Ansprüche, wobei mehr als zwei Modellfunktionen (Δᵢ, Δⱼ) ermittelt werden und der Einbauwinkel (ϕ) des Anemotropometers (3) als Mittelwert aus mehreren ermittelten Schnittpunktwerten (SP) der gemessenen Windrichtung (µ), bei welchen sich jeweils zwei Modellfunktionen (Δᵢ, Δⱼ) für verschiedene Windgeschwindigkeitsbins (i, j) schneiden, ausgegeben wird.

6. Verfahren (100) nach einem der vorangehenden Ansprüche, wobei zur Messung der ersten Windgeschwindigkeit (WS1) die vom ersten Anemometer (2a) erzeugte Vielzahl an Messwerten mit einer ersten Korrekturfunktion korrigiert wird und/oder zur Messung der zweiten Windgeschwindigkeit (WS2) die vom zweiten Anemometer (2b) erzeugte Vielzahl an Messwerten mit einer zweiten Korrekturfunktion korrigiert wird.

7. Verfahren (200) zur Überwachung einer Windenergieanlage (10) mit einem Anemotropometer (3), welches auf einer Leeseite eines Rotors (12) der Windenergieanlage (10) zusammen mit zwei Anemometern (2a, 2b) angeordnet ist, aufweisend die Arbeitsschritte:
zyklisches Ausführen des Verfahrens (100) nach einem der vorangehenden Ansprüche;
Ermitteln einer Kalibrationsgüte auf Grundlage eines zeitlichen Verlaufs des zyklisch ausgegebenen Einbauwinkels (ϕ).

8. Verfahren zum Betreiben einer Windenergieanlage (10) mit einer auf einem Turm angeordneten Gondel (5), einem Rotor (12) und einem Anemotropometer (3), das auf einer Leeseite des Rotors (12) zusammen mit zwei Anemometern (2a, 2b) angeordnet ist, die folgenden Arbeitsschritte aufweisend:
Bestimmen eines Einbauwinkels (ϕ) mittels eines Verfahrens (100) gemäß einem der Ansprüche 1 bis 6;
Justieren (S6) des Anemotropometers (3) auf Grundlage des ausgegebenen Einbauwinkels (ϕ); und
Ausrichten (S7) der Gondel (5) auf Grundlage von mittels des justierten Anemotropometers (3) gemessenen Windrichtungen (µ).

9. Computerprogramm, das Anweisungen umfasst, welche, wenn sie von einem Computer ausgeführt werden, diesen dazu veranlassen, die Schritte eines Verfahrens (100, 200) gemäß einem der Ansprüche 1 bis 8 ausführen.

10. Computer-lesbares Medium, auf dem ein Computerprogramm nach Anspruch 9 gespeichert ist.

11. System (1) zur Kalibrierung eines Anemotropometers einer Windenergieanlage (10) mit einem Anemotropometer (3) zum Messen einer Windrichtung (µ), einem ersten Anemometer (2a) zum Messen einer ersten Windgeschwindigkeit (WS1), einem zweiten Anemometer (2b) zum Messen einer zweiten Windgeschwindigkeit (WS2) und einer Steuereinrichtung (4), wobei das Anemotropometer (3), das erste Anemometer (2a) und das zweite Anemometer (2b) auf der Leeseite eines Rotors (12) der Windenergieanlageanlage (10) angeordnet sind und die Steuereinrichtung (4) aufweist:
Mittel (4a) zum Aufnehmen einer Vielzahl an Messwerten des ersten und zweiten Anemometers (2a, 2b) und des Anemotropometers (3) über einen vorgegebenen Zeitraum;
Mittel (4b) zum Ermitteln von Differenzen zwischen der ersten Windgeschwindigkeit (WS1) und der zweiten Windgeschwindigkeit (WS2) zu jeweils wenigstens im Wesentlichen gleichen Zeitpunkten;
Mittel (4c) zum Ermitteln einer ersten Modellfunktion (Δᵢ) für eine Beziehung zwischen mittels des Anemotropometers (3) gemessenen Windrichtungen (µ) und ermittelten Differenzen, welche wenigstens im Wesentlichen gleichen Zeitpunkten entsprechen, für ein erstes Windgeschwindigkeitsbin (i);
Mittel (4d) zum Ermitteln einer zweiten Modellfunktion (Δⱼ) für eine Beziehung zwischen mittels des Anemotropometers (3) gemessenen Windrichtungen (µ) und ermittelten Differenzen, welche wenigstens im Wesentlichen gleichen Zeitpunkten entsprechen, für ein zweites Windgeschwindigkeitsbin (j);
Mittel (4e) zum Ermitteln wenigstens eines Schnittpunktwerts (SP) der gemessenen Windrichtung (µ), bei welcher sich die erste Modellfunktion (Δᵢ) und die zweite Modellfunktion (Δⱼ) schneiden; und
eine Schnittstelle (4f), die dazu eingerichtet ist, den wenigstens einen ermittelten Schnittpunktwert (SP) als Einbauwinkel (ϕ) des Anemotropometers (3) auszugeben.

12. System (1) nach Anspruch 11, wobei das erste Anemometer (2a) und das zweite Anemometer (2b) in einer zur Rotorachse (X) des Rotors (12) senkrechten Ebene (E) gemeinsam mit dem Anemotropometer (3) angeordnet sind.

13. System (1) nach Anspruch 11 oder 12, wobei das erste Anemometer (2a) und das zweite Anemometer (2b) voneinander beabstandet angeordnet sind und wobei das erste Anemometer (2a) und das zweite Anemometer (2b) in horizontaler Richtung versetzt angeordnet sind, vorzugsweise in einer Ebene (E), weiter vorzugsweise in demselben Abstand zum Anemotropometer (3).

14. System (1) nach einem der Ansprüche 11 bis 13, wobei das erste Anemometer (2a) baugleich mit dem zweiten Anemometer (2b) ausgebildet ist.

## Claims

1. A method (100) of calibrating an anemotropometer (3) of a wind energy installation (10), which anemotropometer (3) is arranged, together with two anemometers (2a, 2b), on a leeward side of a rotor (12) of the wind energy installation (10), wherein the method (100) comprises the following method steps:
measuring (S1) a first wind speed (WS1) by means of a first anemometer (2a), a second wind speed (WS2) by means of a second anemometer (2b) and a wind direction (µ) by means of the anemotropometer (3), wherein a plurality of measurement values are recorded over a specific period of time;
determining (S2) differences between the first wind speed (WS1) and the second wind speed (WS2) at respective points in time which are at least substantially the same;
determining (S3) a model function (Δᵢ, Δⱼ) for a relationship between measured wind directions (µ) and differences which have been determined which correspond at least substantially to the same points in time, wherein at least a first model function (Δᵢ) is determined for a first wind speed bin (i) and a second model function (j) is determined for a second wind speed bin (Δⱼ);
determining (S4) at least one intersection point value (SP) of the measured wind direction (µ) at which the first model function (Δᵢ) and the second model function (Δⱼ) intersect;
outputting (S5) the intersection point value (SP) as a mounting angle (ϕ) of the anemotropometer (3).

2. A method (100) of calibrating an anemotropometer (3) of a wind energy installation (10), which anemotropometer (3) is arranged, together with two anemometers (2a, 2b), on a leeward side of a rotor (2) of the wind energy installation (10), wherein the method (100) comprises the following method steps:
measuring (S1) a first wind speed (WS1) by means of a first anemometer (2a), a second wind speed (WS2) by means of a second anemometer (2b) and a wind direction (µ) by means of the anemotropometer (3), wherein a plurality of measurement values are recorded over a specific period of time;
determining (S2) differences between the first wind speed (WS1) and the second wind speed (WS2) at respective points in time which are at least substantially the same;
determining (S3) a model function (Δᵢ) for a relationship between measured wind directions (µ) and differences which have been determined which correspond at least substantially to the same points in time, for a wind speed bin (i);
determining (S4) a value of the measured wind direction (µ) at which the model function (Δᵢ) assumes a predetermined difference value, in particular at least substantially zero; and
outputting (S5), as a mounting angle (ϕ) of the anemotropometer, the value which has been determined.

3. The method (100) according to any one of the preceding claims, wherein the model on which the model function (Δᵢ, Δⱼ) is based is linear.

4. The method (100) according to any one of the preceding claims, wherein the model function (Δᵢ, Δⱼ) is determined on the basis of a compensation calculation, in particular on a regression analysis.

5. The method (100) according to any one of the preceding claims, wherein more than two model functions (Δᵢ, Δⱼ) are determined and the mounting angle (ϕ) of the anemotropometer (3) is output as an average value from a plurality of intersection point values (SP) of the measured wind direction (µ), which intersection point values (SP) have been determined, at each of which two model functions (Δᵢ, Δⱼ) for different wind speed bins (i, j) intersect.

6. The method (100) according to any one of the preceding claims, wherein, for the purpose of measuring the first wind speed (WS1), the plurality of measured values generated by the first anemometer (2a) is corrected with a first correction function, and/or for the purpose of measuring the second wind speed (WS2), the plurality of measured values generated by the second anemometer (2b) is corrected with a second correction function.

7. A method (200) of monitoring a wind energy installation (10) with an anemotropometer (3), which is arranged, together with two anemometers (2a, 2b), on a leeward side of a rotor (12) of the wind energy installation (10), wherein the method (200) comprises the following method steps:
cyclically carrying out the method (100) according to any one of the preceding claims;
determining a calibration quality on the basis of a development, over time, of the mounting angle (ϕ), which is output cyclically.

8. A method of operating a wind energy installation (10) with a nacelle (5) arranged on a tower, a rotor (12) and an anemotropometer (3), which is arranged, together with two anemometers (2a, 2b), on a leeward side of the rotor (12), wherein the method comprises the following method steps:
determining a mounting angle (ϕ) by means of a method (100) according to any one of the claims 1 to 6;
adjusting (S6) the anemotropometer (3) on the basis of the mounting angle (ϕ) which has been output; and
aligning (S7) the nacelle (5) on the basis of wind directions (µ) which have been measured by means of the adjusted anemotropometer (3).

9. A computer program which comprises instructions which, when they are being executed by a computer, cause the computer to carry out the steps of a method (100, 200) according to any one of the claims 1 to 8.

10. A computer-readable medium on which a computer program according to claim 9 is stored.

11. A system (1) for calibrating an anemotropometer of a wind energy installation (10) comprising an anemotropometer (3) for measuring a wind direction (µ), a first anemometer (2a) for measuring a first wind speed (WS1), a second anemometer (2b) for measuring a second wind speed (WS2) and a control device (4), wherein the anemotropometer (3), the first anemometer (2a) and the second anemometer (2b) are arranged on the leeward side of a rotor (12) of the wind energy installation (10) and wherein the control device (4) comprises:
means (4a) for recording a plurality of measurement values of the first and second anemometers (2a, 2b) and of the anemotropometer (3) over a predetermined period of time;
means (4b) for determining differences between the first wind speed (WS1) and the second wind speed (WS2) at respective points in time which are at least substantially the same;
means (4c) for determining a first model function (Δᵢ) for a relationship between wind directions (µ) measured by means of the anemotropometer (3) and differences which have been determined which correspond at least substantially to the same points in time, for a first wind speed bin (i);
means (4d) for determining a second model function (Δⱼ) for a relationship between wind directions (µ) measured by means of the anemotropometer (3) and differences which have been determined which correspond at least substantially to the same points in time, for a second wind speed bin (j);
means (4e) for determining at least one intersection point value (SP) of the measured wind direction (µ) at which the first model function (Δᵢ) and the second model function (Δⱼ) intersect; and
an interface (4f) which is set up to output, as a mounting angle (ϕ) of the anemotropometer (3), the at least one intersection point value (SP) which has been determined.

12. The system (1) according to claim 11, wherein the first anemometer (2a) and the second anemometer (2b) are arranged, together with the anemotropometer (3), in a plane (E) which is perpendicular to the rotor axis (X) of the rotor (12).

13. The system (1) according to claim 11 or 12, wherein the first anemometer (2a) and the second anemometer (2b) are arranged at a distance from one another and wherein the first anemometer (2a) and the second anemometer (2b) are arranged offset in the horizontal direction, preferably in one plane (E), more preferably at the same distance from the anemotropometer (3).

14. The system (1) according to any one of the claims 11 to 13, wherein the first anemometer (2a) is constructed so as to be of the same construction as the second anemometer (2b).

## Revendications

1. Procédé (100) d'étalonnage d'un anémotropomètre (3) d'une éolienne (10), lequel est disposé conjointement avec deux anémomètres (2a, 2b) sur un côté sous le vent d'un rotor (12) de l'éolienne (10), présentant des étapes de travail suivantes :
mesure (S1) d'une première vitesse du vent (WS1) au moyen d'un premier anémomètre (2a), d'une seconde vitesse du vent (WS2) au moyen d'un second anémomètre (2b) et d'un sens du vent (µ) au moyen de l'anémotropomètre (3), dans lequel une pluralité de valeurs de mesure sont enregistrées sur une période de temps définie ;
détermination (S2) de différences entre la première vitesse du vent (WS1) et la seconde vitesse du vent (WS2) à des moments respectivement au moins sensiblement identiques ;
détermination (S3) d'une fonction modèle (Δᵢ, Δⱼ) pour une relation entre des sens du vent (µ) mesurés et des différences déterminées, lesquelles correspondent à des moments au moins sensiblement identiques, dans lequel au moins une première fonction modèle (Δᵢ) est déterminée pour un premier groupement de vitesses de vent (i) et une deuxième fonction modèle (j) est déterminée pour un deuxième groupement de vitesses de vent (Δᵢ) ;
détermination (S4) d'au moins une valeur d'intersection (SP) du sens du vent (µ) mesuré, à laquelle la première fonction modèle (Δᵢ) et la deuxième fonction modèle (Δⱼ) s'entrecoupent ;
émission (S5) de la valeur d'intersection (SP) en tant qu'angle de montage (ϕ) de l'anémotropomètre (3).

2. Procédé (100) d'étalonnage d'un anémotropomètre (3) d'une éolienne (10), lequel est disposé conjointement avec deux anémomètres (2a, 2b) sur un côté sous le vent d'un rotor (2) de l'éolienne (10), présentant des étapes de travail suivantes :
mesure (S1) d'une première vitesse du vent (WS1) au moyen d'un premier anémomètre (2a), d'une seconde vitesse du vent (WS2) au moyen d'un second anémomètre (2b) et d'un sens du vent (µ) au moyen de l'anémotropomètre (3), dans lequel une pluralité de valeurs de mesure sont enregistrées sur une période de temps définie ;
détermination (S2) de différences entre la première vitesse du vent (WS1) et la seconde vitesse du vent (WS2) à des moments respectivement au moins sensiblement identiques ;
détermination (S3) d'une fonction modèle (Δᵢ) pour une relation entre des sens du vent (µ) mesurés et des différences déterminées, lesquelles correspondent au moins sensiblement à des moments identiques, pour un groupement de vitesses du vent (i) ;
détermination (S4) d'une valeur du sens du vent (µ) mesuré, à laquelle la fonction modèle (Δᵢ) adopte une valeur de différence spécifiée, en particulier au moins sensiblement nulle ; et
émission (S5) de la valeur déterminée en tant qu'angle de montage (ϕ) de l'anémotropomètre.

3. Procédé (100) selon l'une quelconque des revendications précédentes, dans lequel le modèle sous-jacent à la fonction modèle (Δᵢ, Δⱼ) est linéaire.

4. Procédé (100) selon l'une quelconque des revendications précédentes, dans lequel la fonction modèle (Δᵢ, Δⱼ) est déterminée sur la base d'un calcul de compensation, en particulier sur une analyse de régression.

5. Procédé (100) selon l'une quelconque des revendications précédentes, dans lequel plus de deux fonctions modèles (Δᵢ, Δⱼ) sont déterminées et l'angle de montage (ϕ) de l'anémotropomètre (3) est émis en tant que valeur moyenne à partir de plusieurs valeurs d'intersection (SP) déterminées du sens du vent (µ) mesuré, auxquelles respectivement deux fonctions modèles (Δᵢ, Δⱼ) pour des groupements de vitesses du vent (i, j) différents s'entrecoupent.

6. Procédé (100) selon l'une quelconque des revendications précédentes, dans lequel la pluralité de valeurs de mesure générée par le premier anémomètre (2a) est corrigée avec une première fonction de correction pour mesurer la première vitesse du vent (WS1) et/ou la pluralité de valeurs de mesure générée avec le second anémomètre (2b) est corrigée avec une deuxième fonction de correction pour mesurer la seconde vitesse du vent (WS2).

7. Procédé (200) de surveillance d'une éolienne (10) avec un anémotropomètre (3), lequel est disposé conjointement avec deux anémomètres (2a, 2b) sur un côté sous le vent d'un rotor (12) de l'éolienne (10), présentant les étapes de travail :
exécution cyclique du procédé (100) selon l'une quelconque des revendications précédentes ;
détermination d'une qualité d'étalonnage sur la base d'une évolution dans le temps de l'angle de montage (ϕ) émis de manière cyclique.

8. Procédé servant à faire fonctionner une éolienne (10) avec une nacelle (5) disposée sur une tour, un rotor (12) et un anémotropomètre (3), qui est disposé conjointement avec deux anémomètres (2a, 2b) sur un côté sous le vent du rotor (12), qui présente les étapes de travail suivantes :
définition d'un angle de montage (ϕ) au moyen d'un procédé (100) selon l'une quelconque des revendications 1 à 6 ;
ajustage (S6) de l'anémotropomètre (3) sur la base de l'angle de montage (ϕ) émis ; et
orientation (S7) de la nacelle (5) sur la base de sens du vent (µ) mesurés au moyen de l'anémotropomètre (3) ajusté.

9. Programme informatique, qui comprend des instructions, lesquelles, quand elles sont exécutées par un ordinateur, amènent celui-ci à exécuter les étapes d'un procédé (100, 200) selon l'une quelconque des revendications 1 à 8.

10. Support lisible par ordinateur, sur lequel un programme informatique selon la revendication 9 est stocké.

11. Système (1) d'étalonnage d'un anémotropomètre d'une éolienne (10) avec un anémotropomètre (3) servant à mesurer un sens du vent (µ), un premier anémomètre (2a) servant à mesurer une première vitesse du vent (WS1), un second anémomètre (2b) servant à mesurer une seconde vitesse du vent (WS2) et un dispositif de commande (4), dans lequel l'anémotropomètre (3), le premier anémomètre (2a) et le second anémomètre (2b) sont disposés sur le côté sous le vent d'un rotor (12) de l'éolienne (10) et le dispositif de commande (4) présente :
des moyens (4a) servant à enregistrer une pluralité de valeurs de mesure du premier et second anémomètre (2a, 2b) et de l'anémotropomètre (3) sur une période de temps spécifiée ;
des moyens (4b) servant à déterminer des différences entre la première vitesse du vent (WS1) et la seconde vitesse du vent (WS2) à des moments respectivement au moins sensiblement identiques ;
des moyens (4c) servant à déterminer une première fonction modèle (Δᵢ) pour une relation entre des sens du vent (µ) mesurés au moyen de l'anémotropomètre (3) et des différences déterminées, lesquelles correspondent à des moments au moins sensiblement identiques, pour un premier groupement de vitesses de vent (i) ;
des moyens (4d) servant à déterminer une deuxième fonction modèle (Δᵢ) pour une relation entre des sens du vent (µ) mesurés au moyen de l'anémotropomètre (3) et des différences déterminées, lesquelles correspondent à des moments au moins sensiblement identiques, pour un deuxième groupement de vitesses de vent (j) ;
des moyens (4e) servant à déterminer au moins une valeur d'intersection (SP) du sens du vent (µ) mesuré, à laquelle la première fonction modèle (Δᵢ) et la deuxième fonction modèle (Aⱼ) s'entrecroupent ; et
une interface (4f), qui est mise au point pour émettre l'au moins une valeur d'intersection (SP) déterminée en tant qu'angle de montage (ϕ) de l'anémotropomètre (3).

12. Système (1) selon la revendication 11, dans lequel le premier anémomètre (2a) et le second anémomètre (2b) sont disposés conjointement avec l'anémotropomètre (3) dans un plan (E) perpendiculaire par rapport à l'axe de rotor (X) du rotor (12).

13. Système (1) selon la revendication 11 ou 12, dans lequel le premier anémomètre (2a) et le second anémomètre (2b) sont disposés à distance l'un de l'autre et dans lequel le premier anémomètre (2a) et le second anémomètre (2b) sont disposés de manière décalée dans la direction horizontale, de préférence dans un plan (E), de manière davantage préférée à une même distance par rapport à l'anémotropomètre (3).

14. Système (1) selon l'une quelconque des revendications 11 à 13, dans lequel le premier anémomètre (2a) est réalisé avec une structure identique à celle du second anémomètre (2b).
